# EUROPÄISCHE PATENTSCHRIFT

(11) **EP 1 875 062 B1**
(45) Veröffentlichungstag und Bekanntmachung des Hinweises auf die Patenterteilung: **05.01.2011**
(21) Anmeldenummer: 06722589.6
(22) Anmeldetag: 11.03.2006
(51) Int. Cl.: F02M 25/07

(54) **BRENNKRAFTMASCHINE MIT ABGASRÜCKFÜHRUNG**
INTERNAL COMBUSTION ENGINE HAVING EXHAUST GAS RECIRCULATION
MOTEUR A COMBUSTION INTERNE A RECYCLAGE DES GAZ D'ECHAPPEMENT

(30) Priorität: 29.04.2005 DE 102005020482
(43) Veröffentlichungstag der Anmeldung: 09.01.2008
(73) Patentinhaber: Mahle International GmbH, 70376 Stuttgart (DE)
(72) Erfinder: WEISZ, Rafael, 71332 Waiblingen (DE)
(74) Vertreter: BRP Renaud & Partner
(86) Internationale Anmeldenummer: PCT/DE2006/000432
(87) Internationale Veröffentlichungsnummer: WO 2006/116958

(56) Entgegenhaltungen:
- EP-A- 0 840 000
- EP-A- 0 928 892
- EP-A- 1 020 633
- EP-A- 1 464 823
- WO-A-2004/059146
- DE-C1- 4 410 487

## Beschreibung

Die vorliegende Erfindung betrifft ein Abgasrückführventil mit den Merkmalen des Oberbegriffs des Anspruchs 1. Die Erfindung betrifft außerdem eine mit einem derartigen Abgasrückführventil ausgestattete Brennkraftmaschine.

Die Rückführung von Abgasen ist allgemein bekannt und dient im wesentlichen zur Reduzierung der Stickoxidbildung. Dabei wird zwischen interner Abgasrückführung, die aufgrund von Überschneidungen der öffnungszeiten von Einlass- und Auslassventilen entsteht, und externer Abgasrückführung unterschieden, die mit Hilfe einer Abgasrückführleitung einen Abgase von der Brennkraftmaschine abführenden Abgastrakt mit einem die Brennkraftmaschine mit Frischluft versorgenden Frischlufttrakt verbindet.

Bei einem herkömmlichen Abgasrückführsystem ist in dieser Abgasrückführleitung oder kurz AGR-Leitung üblicherweise ein Abgasrückführventil zum Einstellen einer Menge des von der Abgasseite zur Frischluftseite rückgeführten Abgases angeordnet. Dieses Abgasrückführventil oder kurz AGR-Ventil ist somit zum Einstellen der Abgasrückführmenge oder Abgasrückführrate ausgestaltet. Das AGR-Ventil steuert die AGR-Menge oder AGR-Rate in Abhängigkeit von Betriebsparametern der Brennkraftmaschine.

Bei einer Brennkraftmaschine mit interner Verbrennung kommt es sowohl auf der Frischluftseite als auch auf der Abgasseite zu Druckpulsationen, die auf die Ladungswechselvorgänge zurückzuführen sind. Derartige Druckpulsationen treten auch dann auf, wenn die Brennkraftmaschine mit einem Lader, insbesondere mit einem Abgasturbolader oder mit einem Kompressor , ausgestattet ist. Aufgrund dieser Pulsationen, die wesentlich durch den aktuellen Betriebszustand der Brennkraftmaschine bestimmt sind, kann es zumindest kurzzeitig zu Situationen kommen, in denen auf der Frischluftseite ein größerer Druck herrscht als auf der Abgasseite. Damit bei derartigen Druckverhältnissen die Frischluft nicht über die Abgasrückführleitung auf die Abgasseite gelangt, ist bei herkömmlichen Abgasrückführsystemen in der Abgasrückführleitung zusätzlich zum AGR-Ventil ein Rückschlagsperrventil angeordnet, das zur Abgasseite hin sperrt. Auf diese Weise kann ein unerwünschter Druckabfall auf der Frischluftseite vermieden werden.

Durch den Einbau eines AGR-Ventils und eines Rückschlagsperrventils in die Abgasrückführleitung gestaltet sich ein herkömmliches Abgasrückführsystem vergleichsweise aufwändig. Des Weiteren benötigen das AGR-Ventil und das Rückschlagsperrventil zusammen einen vergleichsweise großen Bauraum, der bei modernen Brennkraftmaschinen bekanntermaßen knapp ist.

Aus der DE 44 10 487 C1 ist ein Abgasrückführventil bekannt, mit dessen Hilfe Abgase einer Brennkraftmaschine von deren Abgasseite extern zu deren Frischluftseite rückführbar sind. Das Abgasrückführventil umfasst hierzu ein Ventilglied, das sowohl zum Einstellen einer Menge des von der Abgasseite zur Frischluftseite rückgeführten Abgases als auch zum Sperren einer von der Frischluftseite zur Abgasseite orientierten Gegenströmung dient. Hierzu wirkt das Ventilglied mit einer Einlassöffnung zusammen, die in einem Innenraum des Abgasrückführventils angeordnet ist und die mit einem abgasseitigen Einlassanschluss des Abgasrückführventils kommuniziert. Ferner ist das Ventilglied relativ zur Einlassöffnung verstellbar angeordnet und mittels Rückstellkräften in eine Schließstellung angetrieben oder antreibbar, in welcher das Ventilglied die Einlassöffnung sperrt. Eine Stelleinrichtung wirkt zum Einstellen der Abgasrückführmenge mit dem Ventilglied zusammen, wobei die Stelleinrichtung zum Einstellen der Abgasrückführmenge die Rückstellkräfte variiert. Beim bekannten Abgasrückführventil werden die Rückstellkräfte zu einem Teil mittels eines Federelements erzeugt, zu einem anderen Teil ist eine Druckdose zum Verstellen des Ventilglieds vorgesehen. Außerdem ist ein Elektromagnet vorgesehen, der parallel zum Federelement wirkt und je nach Bestromung die Rückstellkräfte verstärkt oder reduziert.

Ein weiteres Abgasrückführventil, bei dem die Rückstellkräfte des Ventilglieds mittels elektromagnetischer Kräfte variierbar sind, ist aus der EP 0 928 892 A1 bekannt.

Aus der EP 1 020 633A1 ist ein Abgasrückführventil bekannt, dessen Ventilglied in eine Offenstellung vorgespannt ist, die mit Hilfe eines Nockens variierbar ist.

Die vorliegende Erfindung beschäftigt sich mit dem Problem, für eine Brennkraftmaschine bzw. für ein AGR-Ventil eine verbesserte Ausführungsform anzugeben, die es insbesondere ermöglicht, ein Abgasrückführsystem vergleichsweise preiswert und kompakt auszugestalten.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Mengeneinstellfunktion eines herkömmlichen AGR-Ventils und die Rückschlagsperrfunktion eines herkömmlichen Rückschlagsperrventils in ein einziges Ventil zu integrieren, das im folgenden auch als Kombi-Ventil bezeichnet wird. Durch die Integration der genannten Funktionalitäten in das erfindungsgemäße AGR-Ventil oder Kombi-Ventil reduziert sich zumindest der erforderliche Montageaufwand zum Einbau der Funktionalitäten in die Abgasrückführleitung, da nunmehr nur noch ein einziges Ventil in die Abgasrückführleitung eingebaut werden muss. Des Weiteren ergeben sich Preisvorteile für die Herstellung eines einzelnen Kombi-Ventils gegenüber der herkömmlichen Herstellung von zwei separaten Ventilen. Darüber hinaus baut das erfindungsgemäße Kombi-Ventil zwangsläufig deutlich kompakter als zwei separate herkömmliche Ventile.

Erfindungsgemäß variiert eine Stelleinrichtung zum Einstellen der Abgasrückführmenge eine Federsteifigkeit eines Federelements, mit dessen Hilfe die das Ventilglied in die Schließstellung antreibenden Rückstellkräfte zumindest teilweise erzeugt werden, so dass letztlich die Variation der Rückstellkräfte durch Variieren der Federsteifigkeit des Federelements erfolgt.

Weitere Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Prinzipdarstellung einer Brennkraftmaschine nach der Erfindung,
- Fig. 2: einen Längsschnitt durch ein AGR-Ventil nach der Erfindung,
- Fig. 3: eine perspektivische Ansicht auf einen Teil des AGR-Ventils aus Fig. 2,
- Fig. 4: einen Längsschnitt durch ein AGR-Ventil wie in Fig. 2, jedoch bei einer anderen nicht vom Schutz der Ansprüche erfassten Ausführungsform,
- Fig. 5: eine perspektivische Ansicht auf ein Ventilglied der Ausführungsform gemäß Fig. 4,
- Fig. 6: einen Längsschnitt durch ein AGR-Ventil wie in Fig. 4, jedoch bei einer anderen nicht vom Schutz der Ansprüche erfassten Ausführungsform,
- Fig. 7: eine perspektivische und teilweise geschnittene Ansicht auf ein AGR-Ventil, jedoch bei einer wei- teren nicht vom Schutz der Ansprüche erfassten Ausführungsform,
- Fig. 8: einen Längsschnitt des AGR-Ventils aus Fig. 7, bei einer maximal geöffneten Stellung eines Ventil- glieds,
- Fig. 9: einen Längsschnitt wie in Fig. 8, jedoch bei in seine Schließstellung verstelltem Ventilglied,
- Fig. 10: einen Längsschnitt wie in Fig. 2, jedoch bei einer anderen nicht vom Schutz der Ansprüche erfassten Ausführungsform,
- Fig. 11: einen Längsschnitt wie in Fig. 10, jedoch bei ei- ner weiteren nicht vom Schutz der Ansprüche er- fassten Ausführungsform.

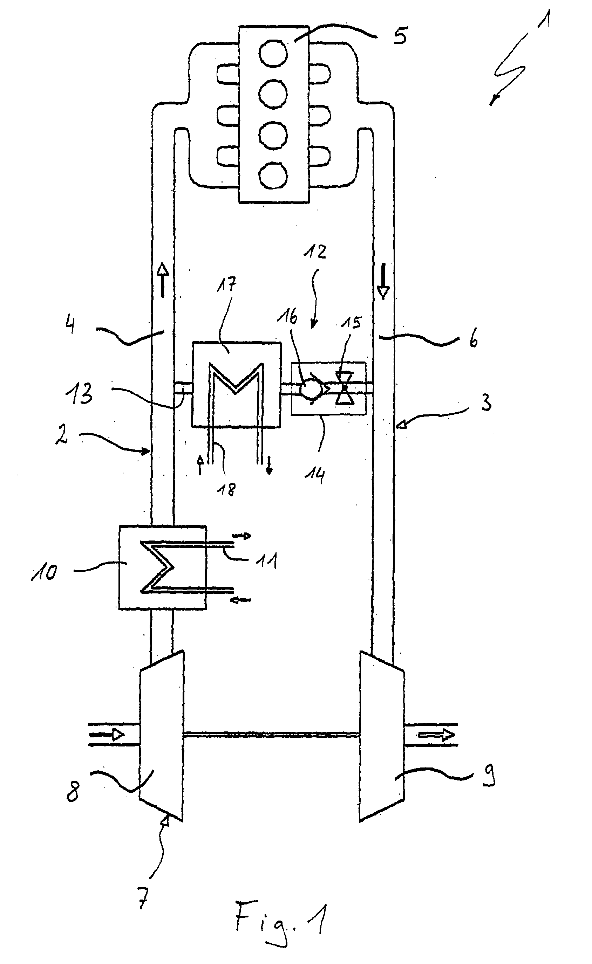

Entsprechend Fig. 1 umfasst eine Brennkraftmaschine 1 nach der Erfindung einen Frischlufttrakt 2, durch den die Brennkraftmaschine 1 mit Frischluft versorgt wird, sowie einen Abgastrakt 3, der Verbrennungsabgase von der Brennkraftmaschine 1 wegführt. Der Frischlufttrakt 2 weist hierzu eine Frischluftleitung 4 auf, die zu einem Motorblock 5 der Brennkraftmaschine 1 führt, der die einzelnen Brennräume der Brennkraftmaschine 1 aufweist. In entsprechender Weise weist der Abgastrakt 3 eine Abgasleitung 6 auf, die vom Motorblock 5 wegführt.

Im gezeigten Ausführungsbeispiel ist die Brennkraftmaschine 1 aufgeladen, das heißt, die Frischluft wird im Frischlufttrakt 2 mit Hilfe eines Laders 7 auf ein erhöhtes Druckniveau gebracht. Im vorliegenden Ausführungsbeispiel ist der Lader 7 als Abgasturbolader ausgestaltet, der einen in der Frischluftleitung 4 angeordneten Verdichter 8 sowie eine in der Abgasleitung 6 angeordnete Turbine 9 umfasst. Grundsätzlich kann auch ein anderer Lader 7, zum Beispiel ein mechanisch arbeitender Kompressor, vorgesehen sein.

In üblicher Weise ist in der Frischluftleitung 4 stromab des Verdichters 8 ein Ladeluftkühler 10 angeordnet, der an einen entsprechenden Kühlkreis 11 angeschlossen ist.

Die Brennkraftmaschine 1 ist außerdem mit einem Abgasrückführsystem 12 ausgestattet, das zumindest eine Abgasrückführleitung 13 aufweist, welche die Abgasleitung 6 mit der Frischluftleitung 4 verbindet. Erfindungsgemäß ist nun in dieser Abgasrückführleitung 13 oder kurz AGR-Leitung 13 ein neuartiges Abgasrückführventil 14 oder kurz AGR-Ventil 14 angeordnet, das im folgenden auch als Kombi-Ventil 14 bezeichnet wird. Das AGR-Ventil 14 ist erfindungsgemäß so ausgestaltet, dass es sowohl eine Mengeneinstellfunktion, die in Fig. 1 durch ein Ventilsymbol 15 visualisiert ist, als auch eine Rückschlagsperrfunktion realisiert, die in Fig. 1 durch ein Rückschlagventilsymbol 16 visualisiert ist. Dieses Kombi-Ventil 14 dient somit sowohl zum Einstellen einer Menge des von der Abgasseite, also von der Abgasleitung 6 zur Frischluftseite, also zur Frischluftleitung 4 rückgeführten Abgases als auch zum Sperren einer Gegenströmung, die von der Frischluftseite zur Abgasseite hin orientiert ist. Ein solches kombiniertes AGR-Ventil 14 baut vergleichsweise kompakt, benötigt jedenfalls weniger Bauraum als ein separates Rückschlagsperrventil und ein separates Einstellventil. Des Weiteren kann ein derartiges Kombi-Ventil 14 durch seinen erhöhten Integrationsgrad preiswerter hergestellt werden als zwei separate Ventile, die jeweils auf eine der genannten Funktionen 15, 16 spezialisiert sind.

Bei der hier gezeigten Ausführungsform ist in der Abgasrückführleitung 13 außerdem ein Abgaskühler 17 angeordnet, der an einen Kühlkreis 18 angeschlossen ist und dazu dient, das ggf. rückgeführte Abgas zur Erhöhung des Massenstroms zu kühlen.

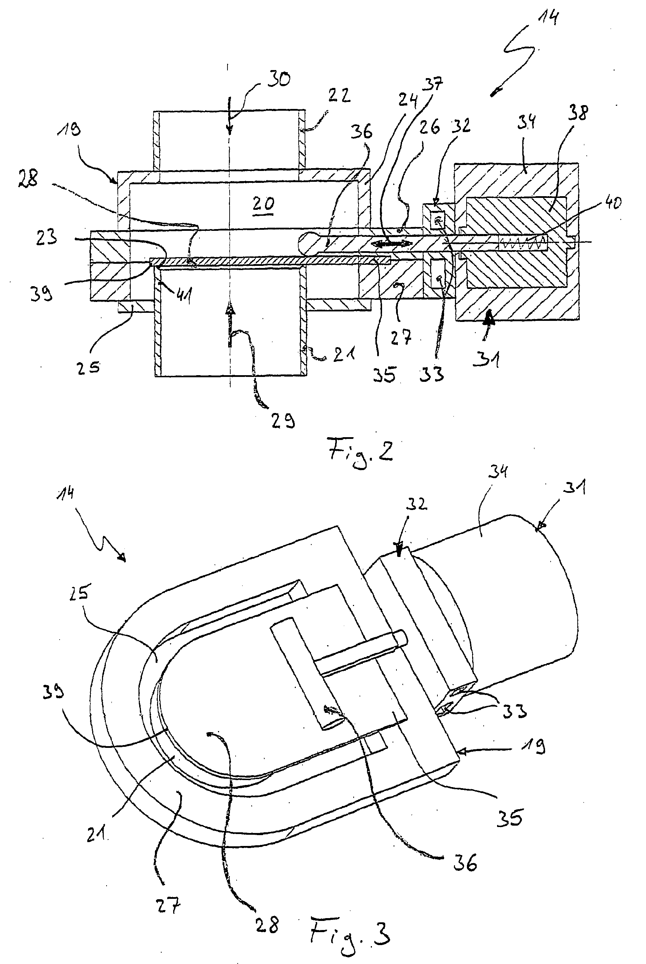

Das in Fig. 1 eingeführte spezielle AGR-Ventil 14 kann grundsätzlich auf beliebige, geeignete Weise aufgebaut sein, um die genannten Funktionen 15, 16 integriert zu realisieren. Im folgenden werden mit Bezug auf die Fig. 2 bis 11 bevorzugte Ausführungsformen eines derartigen AGR-Ventils 14 näher erläutert, jedoch ohne Beschränkung der Allgemeinheit.

Entsprechend Fig. 2 und 3 umfasst das erfindungsgemäße AGR-Ventil 14 ein Gehäuse 19, das einen Innenraum 20 umschließt, einen Einlassanschluss 21 und einen Auslassanschluss 22 aufweist. Der Einlassanschluss 21 ist als Stutzen ausgebildet und ragt in den Innenraum 20 vor und weist dort eine Einlassöffnung 23 auf.

Das Gehäuse 19 umfasst hier exemplarisch ein Oberteil 24, ein Unterteil 25, ein oberes Mittelteil 26 sowie ein unteres Mittelteil 27, wobei sich die Begriffe "oben" und "unten" lediglich auf die Darstellung gemäß Fig. 2 beziehen und in keiner Weise mit der jeweiligen Einbausituation in Bezug gebracht werden sollen, für den Fall, dass das AGR-Ventil 14 in die AGR-Leitung 13 eingebaut ist. Zur besseren Darstellbarkeit sind in Fig. 3 das Oberteil 24 mit daran angebrachtem Auslassanschluss 22 und das obere Mittelteil 26 weggelassen.

Das AGR-Ventil 14 weist außerdem ein Ventilglied 28 auf, das erfindungsgemäß so ausgestaltet ist, dass es sowohl zum Einstellen der Abgasrückführmenge als auch zum Sperren einer Gegenströmung dient. Eine hinsichtlich ihrer Menge einzustellende Abgasströmung ist dabei durch einen Pfeil 29 symbolisiert, während eine zu sperrende Gegenströmung durch einen Pfeil 30 symbolisiert ist. Dementsprechend ist der Einlassanschluss 21 zum Anschließen des AGR-Ventils 14 an die Abgasseite der Brennkraftmaschine 1 vorgesehen, während der Auslassanschluss 22 zum Anschließen an die Frischluftseite der Brennkraftmaschine 1 vorgesehen ist.

Das Ventilglied 28 ist relativ zur Einlassöffnung 23 verstellbar im Gehäuse 19 angeordnet und wirkt dabei mit dieser Einlassöffnung 23 zusammen, und zwar so, dass das Ventilglied 28 in Abhängigkeit seiner Relativlage zur Einlassöffnung 23 die Einlassöffnung 23 steuert.

Fig. 2 zeigt eine Schließstellung des Ventilglieds 28, in welcher die Einlassöffnung 23 durch das Ventilglied 28 verschlossen ist. Zur Realisierung der Rückschlagsperrfunktion ist das Ventilglied 28 mittels Rückstellkräften in diese Schließstellung angetrieben bzw. antreibbar. Diese Rückstellkräfte sind auf vielfältige Weise realisierbar, was weiter unten noch näher erläutert wird. Zur Realisierung der Mengeneinstellfunktion umfasst das AGR-Ventil 14 außerdem eine Stelleinrichtung 31, die mit dem Ventilglied 28 zusammenwirkt, um die jeweilige AGR-Menge einzustellen.

Des Weiteren kann das AGR-Ventil 14 einen Kühlblock 32 aufweisen, der Kühlkanäle 33 enthält, die an einen nicht näher bezeichneten Kühlkreis angeschlossen sein können. Mit Hilfe des Kühlblocks 32 kann die Stelleinrichtung 31 thermisch vom Gehäuse 19 getrennt werden. Hierzu ist bei der hier gezeigten Ausführungsform der Kühlblock 32 zwischen dem Gehäuse 19 und einem Gehäuse 34 der Stelleinrichtung 31 angeordnet.

Bei der in den Fig. 2 und 3 gezeigten, besonderen Ausführungsform ist die Stelleinrichtung 31 so ausgestaltet, dass sie die Rückstellkräfte, welche das Ventilglied 28 in die Schließstellung antreiben, variieren kann, um dadurch die jeweilige AGR-Menge einzustellen. Den Rückstellkräften wirkt ggf. ein abgasseitiger Überdruck entgegen, der dementsprechend das Ventilglied 28 zum Abheben von der Einlassöffnung 23 antreibt. Durch Variation der Rückstellkräfte lässt sich somit das Abheben des Ventilglieds 28 von der Einlassöffnung 23 und somit der durchströmbare Querschnitt an der Einlassöffnung 23 steuern.

Grundsätzlich ist es möglich, die Rückstellkräfte zumindest teilweise mit Hilfe wenigstens eines Federelements zu erzeugen, das auf entsprechende Weise mit dem Ventilglied 28 zusammenwirkt. Die Stelleinrichtung 31 kann dann so ausgestaltet sein, dass damit eine Federsteifigkeit des besagten Federelements variiert werden kann, um dadurch die am Ventilglied 28 wirksamen Rückstellkräfte in Abhängigkeit der jeweils gewünschten AGR-Menge gezielt einzustellen.

Bei den Ausführungsformen der Fig. 2 und 3 ist ein derartiges Federelement durch das Ventilglied 28 selbst gebildet, das heißt, das Ventilglied 28 ist als Feder, hier als Blattfeder, ausgestaltet und erzeugt selbst die Rückstellkräfte. Das als Blattfeder ausgestaltete Ventilglied 28 ist hierzu am Gehäuse 19 einseitig befestigt. Dementsprechend ist ein festes Ende oder Einspannende 35 des Ventilglieds 28 im Gehäuse 19, hier zwischen den beiden Mittelteilen 26 und 27 eingespannt. Das Ventilglied 28 besteht aus einem geeigneten federelastischen Material, insbesondere aus Federstahl.

Um die Federsteifigkeit des Ventilglieds 28 beeinflussen zu können, weist die Stelleinrichtung 31 ein Stellglied 36 auf, das hier entsprechend einem Doppelpfeil 37 translatorisch verstellbar ist. Die Stelleinrichtung 31 umfasst hierzu einen Stellantrieb 38, der beispielsweise als Spindeltrieb oder als Solenoid oder Hubmagnet ausgestaltet sein kann. Das Stellglied 36 ist bei der Ausführungsform der Fig. 2 und 3 so angeordnet, dass es auf dem Ventilglied 28 an einer von der Einlassöffnung 23 abgewandten Seite aufliegt. Das Stellglied 36 ist dabei parallel zur Längserstreckung des Ventilglieds 28 verstellbar, also in einer vom festen Ende 35 zum davon entfernten freien Ende 39 orientierten Richtung.

Durch Positionieren des Stellglieds 36 kann die Länge des freien federnden Abschnitts des Ventilglieds 28 verändert werden. Je kürzer die Federlänge, desto größer ist die Federsteifigkeit und desto größer sind die von der Abgasströmung 29 zu überwindenden Rückstellkräfte. Bei maximal ausgefahrenem Stellglied 36 ist die frei bewegliche Federlänge des Ventilglieds 28 so kurz, dass die Abgasrückführung quasi gesperrt ist. Bei maximal zurückgezogenem Stellglied 36 ist dieses beispielsweise im Bereich des eingespannten Endes 35 am Ventilglied 28 positioniert, wodurch das Ventilglied 28 im wesentlichen entlang seiner gesamten Länge frei beweglich ist und somit seine minimale Federsteifigkeit aufweist.

Unabhängig von der jeweils eingestellten Federsteifigkeit, also unabhängig von der jeweils eingestellten AGR-Menge, realisiert das Ventilglied 28 zusätzlich die Rückschlagsperrfunktion. Denn sobald auf der Frischluftseite ein Überdruck entsteht, überwiegen zwangsläufig die Rückstellkräfte, so dass das Ventilglied 28 automatisch seine Schließstellung einnimmt und die Einlassöffnung 23 sperrt.

Des Weiteren kann das AGR-Ventil 14 zweckmäßig "fail-safe" ausgelegt sein. Hierzu wird bei einem Ausfall der Energieversorgung des Stellantriebs 38 das Stellglied 36 zwangsläufig maximal ausgefahren, um so die Federsteifigkeit zu maximieren. Die Schließkräfte sind dann ebenfalls maximiert, wodurch eine unerwünschte Abgasrückführung bei Ausfall der Stelleinrichtung 31 vermieden werden kann. Beispielsweise kann hierzu eine Druckfeder 40 vorgesehen sein, die das Stellglied 36 ausfährt, wenn der Stellantrieb 38 ausfällt.

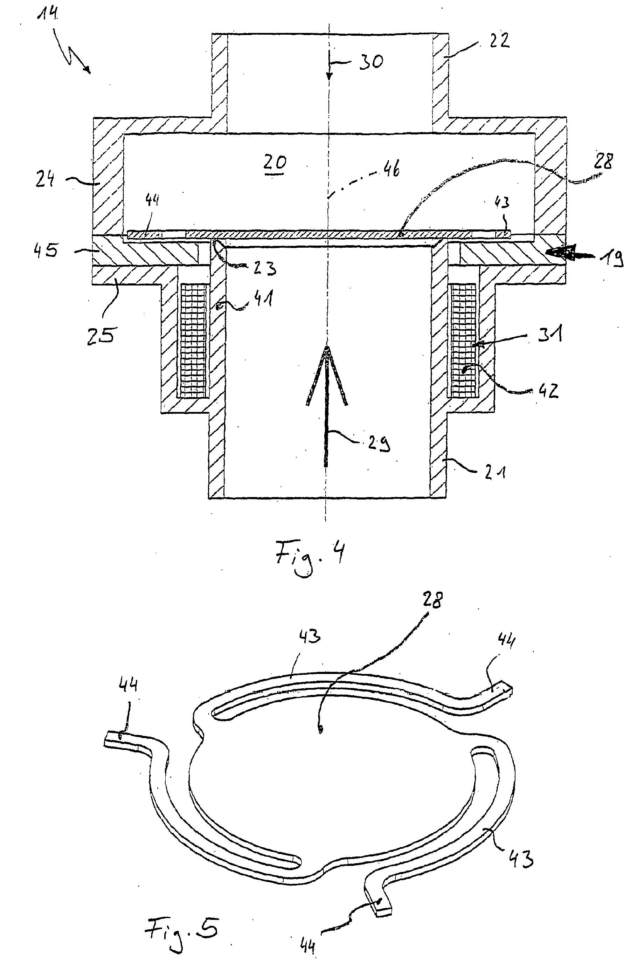

Entsprechend Fig. 4 können bei einer anderen Ausführungsform die Rückstellkräfte zumindest teilweise mittels elektromagnetischer Kräfte erzeugt werden. Die Stelleinrichtung 31 ist dann zweckmäßig so ausgestaltet, dass damit die elektromagnetischen Kräfte variiert werden können, um dadurch die jeweils gewünschte AGR-Menge einzustellen. Entsprechend Fig. 4 wird dies beispielsweise dadurch realisiert, dass ein Einlassstutzen 41, der die Einlassöffnung 23 aufweist und der in den Einlassanschluss 21 übergeht, ferromagnetisch ausgestaltet ist. Die Stelleinrichtung 31 ist dann zumindest mit einer elektromagnetischen Spule 42 ausgestattet, die ringförmig ausgebildet ist und koaxial zum Einlassstutzen 41 angeordnet ist. Darüber hinaus ist das Ventilglied 28 ebenfalls ferromagnetisch ausgestaltet. Zweckmäßig bestehen Einlassstutzen 41 und Ventilglied 28 hierzu aus einem weichmagnetischen Eisen.

Über die Spule 42 kann die Stelleinrichtung 31 ein elektromagnetisches Feld erzeugen, das die gewünschten Schließkräfte in das Ventilglied 28 einleitet. Dabei lassen sich die elektromagnetisch erzeugten Schließkräfte durch die Bestromung der Spule 42 relativ exakt einstellen. Bei maximaler Bestromung der Spule 42 sind die Schließkräfte am Ventilglied 28 maximal, wodurch die Abgasrückführung quasi gesperrt ist. Bei minimaler Bestromung oder bei "entstromter" Spule 42 sind die elektromagnetischen Rückstellkräfte minimiert bzw. aufgehoben. Dennoch ist bei allen Einstellungen der Stelleinrichtung 31 die Rückschlagsperrfunktion des AGR-Ventils 14 aktiv, denn sobald ein Überdruck an der Frischluftseite entsteht, wird das Ventilglied 28 gegen die Einlassöffnung 23 angetrieben. Das Ventilglied 28 ist hier zweckmäßig als Platte oder Scheibe ausgestaltet.

Um die Rückstellkräfte zusätzlich zu verstärken bzw. um auch bei fehlenden elektromagnetischen Kräften Rückstellkräfte in das Ventilglied 28 einleiten zu können, kann zusätzlich zumindest ein Federelement vorgesehen sein. Bei der in Fig. 4 gezeigten Ausführungsform sind mehrere solche Federelemente integral am Ventilglied 28 ausgebildet. Entsprechend Fig. 5 weist das Ventilglied 28 an seinem Rand zumindest einen, hier drei Federarme 43 auf, über die das Ventilglied 28 auf geeignete Weise am Gehäuse 19 abgestützt ist. Beispielsweise sind hierzu Endabschnitte 44 der Federarme 43 im Gehäuse 19 fest eingespannt, beispielsweise zwischen dem Oberteil 24 und einem Mittelteil 45, das seinerseits zwischen dem Oberteil 24 und dem Unterteil 25 angeordnet ist.

Die Federarme 43 erstrecken sich hier jeweils in einer Ebene, in der sich auch das flache Ventilglied 28 erstreckt. Dabei verläuft diese Ebene im wesentlichen senkrecht zur Bewegungsrichtung des Ventilglieds 28. Die Federarme 43 sind hier außerdem als Ringsegmente ausgeformt, die sich konzentrisch zu einer Längsmittelachse 46 des Gehäuses 19 erstrecken. Auf diese Weise ist die Federlänge der Federarme 43 vergleichsweise groß, während gleichzeitig der Bauraum für die Anordnung und Unterbringung der Federarme 43 im Gehäuse 19 vergleichsweise klein bleibt.

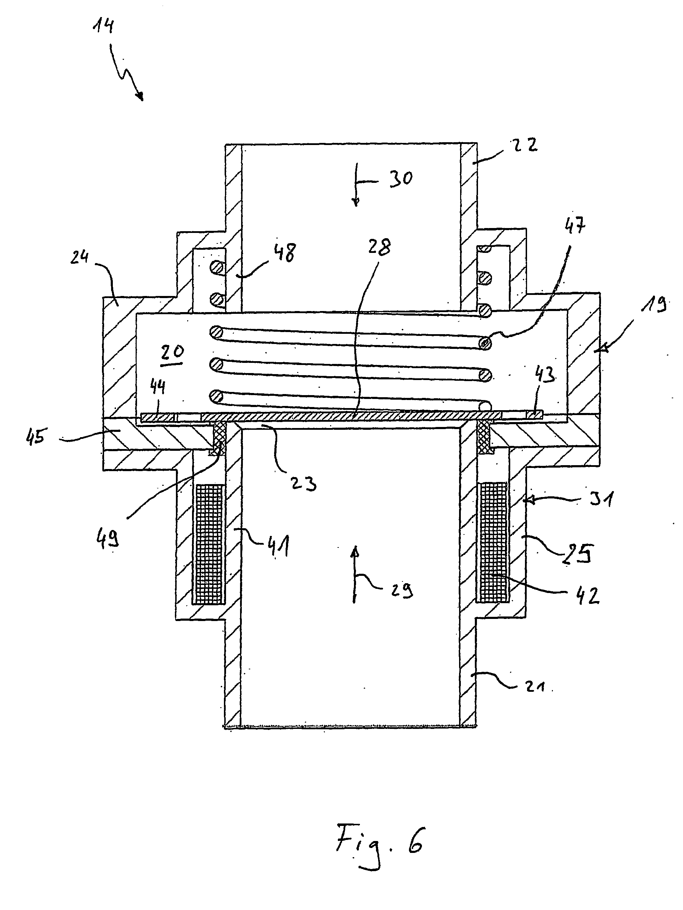

Entsprechend Fig. 6 kann zusätzlich oder alternativ zu den Federarmen 43 des Ventilglieds 28 ein anderes Federelement, z.B. in Form einer Schraubendruckfeder 47 vorgesehen sein, mit deren Hilfe zumindest ein Teil der Rückstellkräfte auf das Ventilglied 28 aufgebracht werden kann. Hierzu stützt sich diese Schraubendruckfeder 47 einenends direkt am Ventilglied 28 und anderenends am Gehäuse 19 ab. Zur Führung und Positionierung der Schraubendruckfeder 47 weist das Oberteil 24 bei der Ausführungsform gemäß Fig. 6 einen Auslassstutzen 48 auf, der radial außen von der Schraubendruckfeder 47 eingefasst ist.

Gemäß Fig. 6 kann im Bereich der Einlassöffnung 23 außerdem zumindest ein Dämpfer 49 vorgesehen sein, der so ausgestaltet ist, dass damit der Aufprall des Ventilglieds 28 beim Einfahren in die Schließstellung gedämpft ist. Beispielsweise besteht der Dämpfer 49 aus einem geeigneten elastischen Dämpfermaterial das bei von der Einlassöffnung 23 abgehobenem Ventilglied 28 über das die Einlassöffnung 23 definierende freie Ende des Einlassstutzens 41 axial vorsteht und mit dem Ventilglied 28 in Kontakt kommt, wenn dieses in die Schließstellung fährt. Auf diese Weise kann eine unerwünschte Geräuschentwicklung vermieden werden. Zweckmäßig ist der Dämpfer 49 ringförmig ausgestaltet und umfasst den Einlassstutzen 41 im Bereich der Einlassöffnung 23.

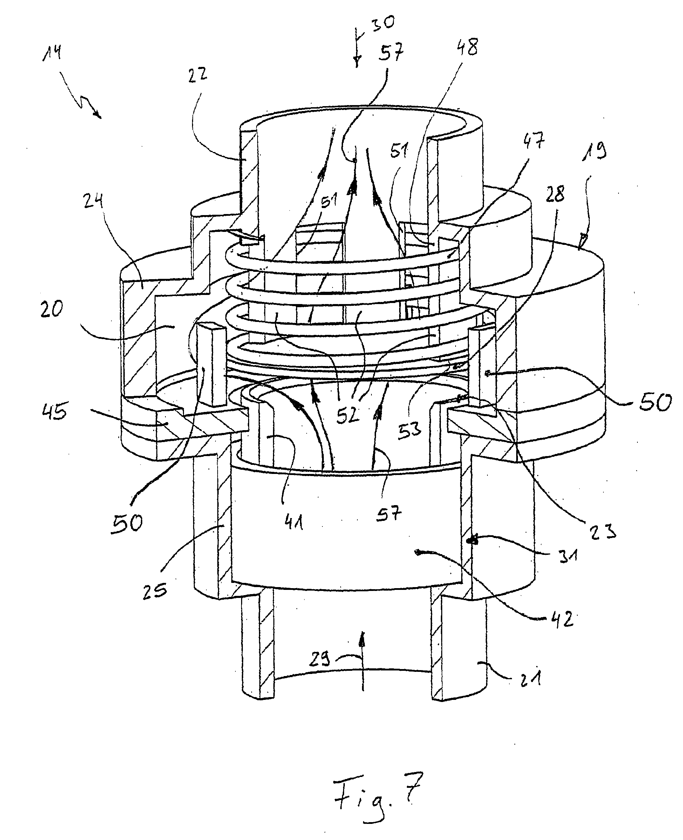

Bei der in den Fig. 7 bis 9 geigten Ausführungsform ist das Ventilglied 28 wieder plattenförmig oder scheibenförmig ausgestaltet, weist jedoch im Unterschied zu den anderen Ausführungsformen keine direkte Verbindung mit dem Gehäuse 19 auf. Das Ventilglied 28 ist somit quasi frei beweglich im Gehäuse 19 gehaltert. Um eine definierte Verstellbewegung für das Ventilglied 28 zu realisieren, sind im Gehäuse 19 zumindest drei Führungselemente 50 vorgesehen, die konzentrisch angeordnet sind und die bezüglich des Ventilglieds 28 umfangsmäßig verteilt positioniert sind. Hierdurch ist das Ventilglied 28 durch die Führungselemente 50 seitlich eingefasst. Die Führungselemente 50 erstrecken sich parallel zur Bewegungsrichtung des Ventilglieds 28 und bewirken dadurch eine Führung in dieser Bewegungsrichtung und verhindern ein Ausweichen des Ventilglieds 28 quer zu seiner Bewegungsrichtung.

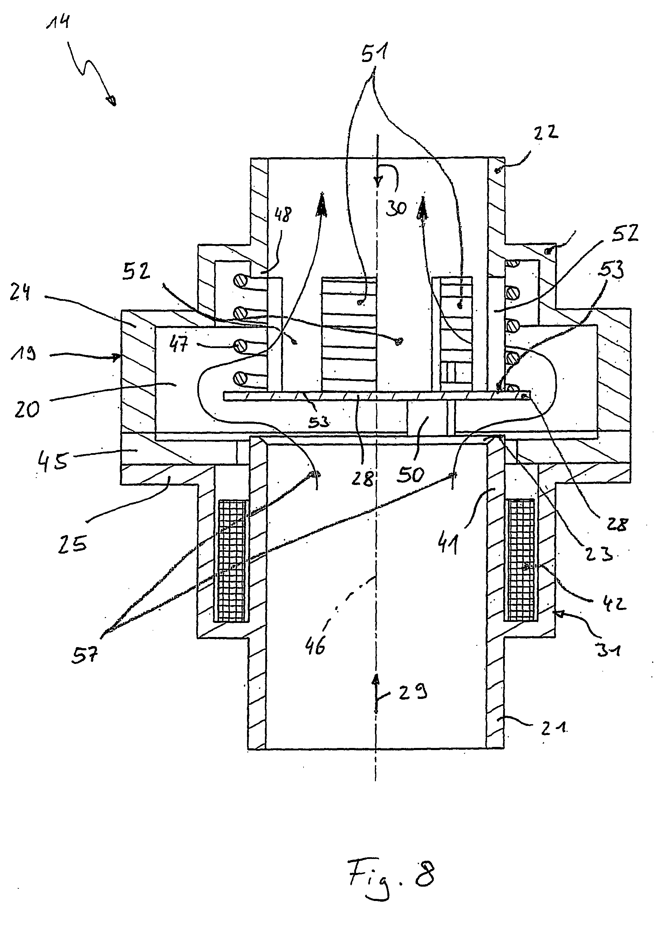

Bei der Ausführungsform gemäß den Fig. 7 bis 9 ist der Auslassstutzen 48 mit Durchbrüchen oder Fenstern 51 ausgestattet, die in Umfangsrichtung verteilt angeordnet sind. Zwischen den Fenstern 51 sind dann Stege 52 ausgebildet, die einerseits die Schraubendruckfeder 47 zentrieren und führen sowie andererseits an ihren axial freien Enden einen Hubanschlag 53 für das Ventilglied 28 definieren. Die Fig. 7 und 8 zeigen das Ventilglied 28 in einer maximal geöffneten Stellung, die sich dadurch charakterisiert, dass das Ventilglied 28 an dem Hubanschlag 53, also an den freien Enden der Stege 52 anliegt.

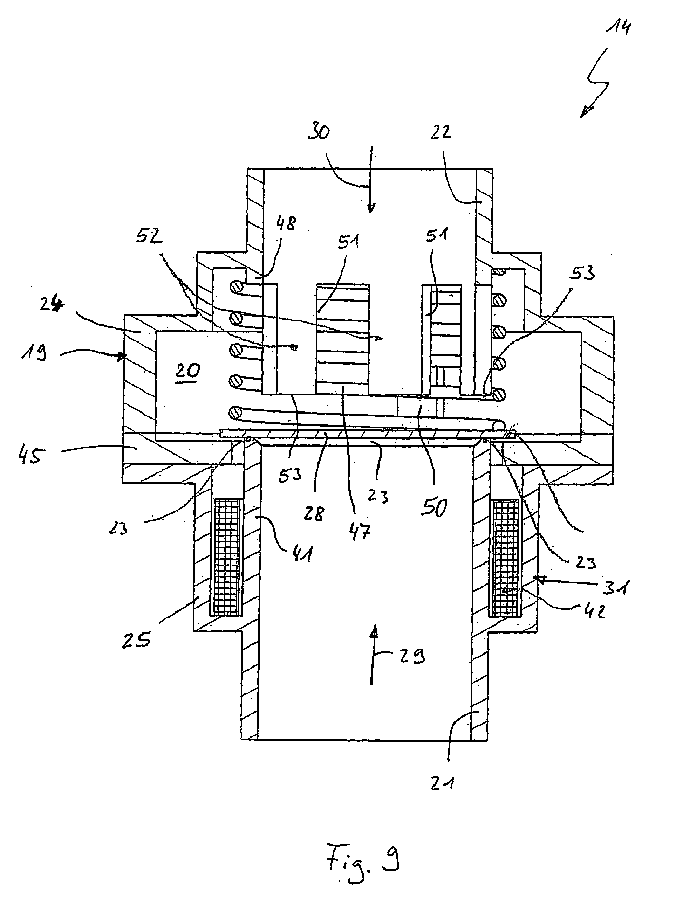

Im Unterschied dazu zeigt Fig. 9 die Schließstellung des Ventilglieds 28, in der die Schraubendruckfeder 47 das Ventilglied 28 gegen das freie Ende des Einlassstutzen 41 anpresst, wodurch das Ventilglied 28 die Einlassöffnung 23 sperrt.

Auch bei dieser Ausführungsform arbeitet die Stelleinrichtung 31 mit elektromagnetischen Kräften, um dadurch die Schließkraft zu variieren. Gleichzeitig arbeitet auch hier die Rückschlagsperrfunktion unabhängig von der jeweils eingestellten AGR-Menge.

Die Ausführungsform der Fig. 7 bis 9 zeichnet sich durch eine besonders günstige Öffnungscharakteristik aus, die bereits bei einem vergleichsweise geringen Öffnungshub des Ventilglieds 28 einen vergleichsweise großen Öffnungsquerschnitt realisiert. Die sich dabei einstellende Durchströmung des AGR-Ventils 14 ist in den Fig. 7 und 8 durch Pfeile 57 symbolisiert.

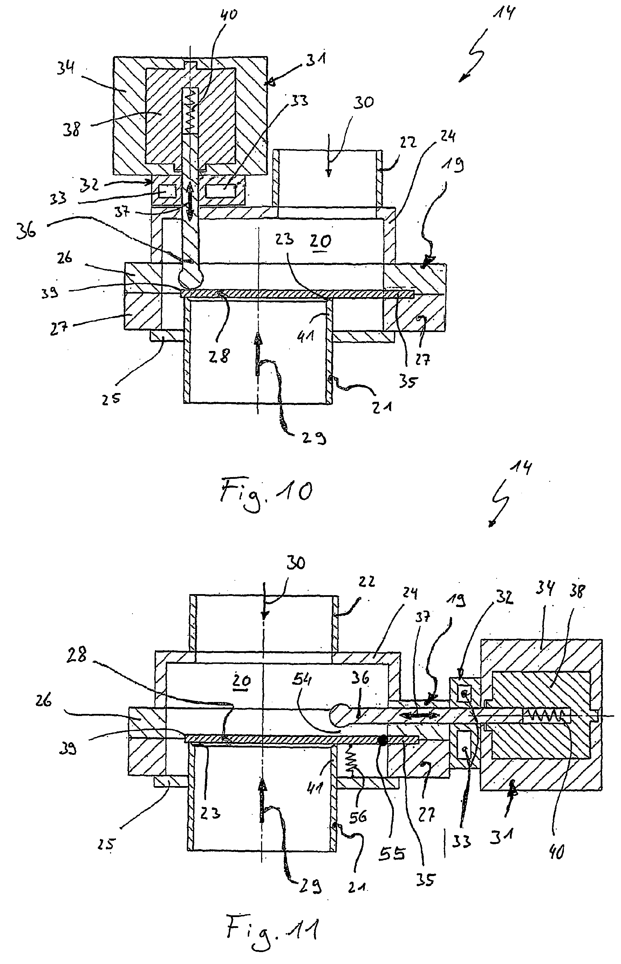

Bei den Ausführungsformen der Fig. 10 und 11 ist die Stelleinrichtung 31 im wesentlichen gleich aufgebaut wie bei der Ausführungsform der Fig. 2 und 3. Allerdings dient die Stelleinrichtung 31 bei den Varianten der Fig. 10 und 11 nicht zum Verändern der Federsteifigkeit einer Schließdruckfeder, insbesondere des als Feder ausgestalteten Ventilglieds 28. Vielmehr ist bei den Ausführungsformen der Fig. 10 und 11 die Stelleinrichtung 31 so ausgestaltet, dass damit ein Stellweg variiert werden kann, der zur Verstellung des Ventilglieds 28 relativ zur Einlassöffnung 23 zur Verfügung steht.

Bei der Ausführungsform gemäß Fig. 10 ist die Stelleinrichtung 31 so angebracht, dass das Stellglied 36 parallel zur Verstellbewegung des Ventilglieds 28 positionierbar ist. In der gezeigten Position des Stellglieds 36 steht das Stellglied 36 mit dem Ventilglied 28 bereits in dessen Schließstellung in Kontakt. D.h., dass bei dieser Position des Stellglieds 36 das Ventilglied 28 nicht öffnen kann; der Stellweg des Ventilglieds 28 ist somit auf den Wert Null reduziert. Durch Einfahren des Stellglieds 36 kann der vom Ventilglied 28 durchfahrbare Stellweg vergrößert werden. Das Ventilglied kann sich dann in Abhängigkeit des abgasseitigen

Überdrucks gegen die Rückstellkräfte, hier gegen die Federkraft des Ventilglieds 28 innerhalb des Stellwegs von der Einlassöffnung 23 entfernen. Auf diese Weise lässt sich durch variieren des Stellwegs die ARG-Menge einstellen.

Bei der Ausführungsform gemäß Fig. 11 ist die Stelleinrichtung 31 grundsätzlich ähnlich angeordnet wie bei der Ausführungsform gemäß Fig. 2. Ein wesentlicher Unterschied besteht jedoch darin, dass in der Schließstellung des Ventilglieds 28 in dessen Bewegungsrichtung ein Abstand zwischen dem Ventilglied 28 und dem Stellglied 36 vorhanden ist. Dieser Abstand ist in Fig. 11 mit 54 bezeichnet. Durch Längsverstellen des Stellglieds 36 wird der Winkel, also der Stellweg den das Ventilglied 28 öffnen bzw. von der Einlassöffnung 23 abheben kann, signifikant beeinflusst. Dementsprechend kann auch hier die ARG-Menge durch variieren des Stellwegs beeinflusst werden. Es ist klar, dass die Bewegungsrichtung des Stellglieds 36 grundsätzlich beliebig gewählt sein kann und somit insbesondere von der horizontalen Ausrichtung gemäß Fig. 11 und der vertikalen Ausrichtung gemäß Fig. 10 abweichen kann.

Fig. 11 zeigt eine weitere Besonderheit, da dort das Ventilglied 28 nicht als Federelement ausgestaltet ist, sondern am Gehäuse über ein Lager oder Gelenk 55 schwenkbar gelagert ist. Zum selbstständigen Zurückschwenken des Ventilglieds 28 in die Schließstellung kann optional eine Schließfeder 56 vorgesehen sein.

Wie auch bei den anderen Ausführungsformen kann das Ventilglied 28 auch hier unabhängig von der jeweils eingestellten AGR-Rate im Falle eines Überdrucks auf der Frischluftseite die Gegenströmung 30 sperren. Denn das Ventilglied 28 ist stets in seiner Schließrichtung frei beweglich.

## Patentansprüche

1. Abgasrückführventil zum Einbau in eine Abgasrückführleitung (13) zum externen Rückführen von Abgasen einer Brennkraftmaschine (1), insbesondere eines Kraftfahrzeugs, von einer Abgasseite der Brennkraftmaschine (1) zu einer Frischluftseite der Brennkraftmaschine (1),
- mit einem Ventilglied (28) sowohl zum Einstellen einer Menge des von der Abgasseite zur Frischluftseite rückgeführten Abgases als auch zum Sperren einer von der Frischluftseite zur Abgasseite orientierten Gegenströmung (30),
- wobei das Ventilglied (28) mit einer Einlassöffnung (23) zusammenwirkt, die in einem Innenraum (20) des AGR-Ventils (14) angeordnet ist und die mit einem abgasseitigen Einlassanschluss (21) des AGR-Ventils (14) kommuniziert,
- wobei das Ventilglied (28) relativ zur Einlassöffnung (23) verstellbar angeordnet ist und mittels Rückstellkräften in eine Schließstellung angetrieben oder antreibbar ist, in welcher das Ventilglied (28) die Einlassöffnung (23) sperrt,
- wobei eine Stelleinrichtung (31) vorgesehen ist, die zum Einstellen der Abgasrückführmenge mit dem Ventilglied (28) zusammenwirkt,
- wobei die Stelleinrichtung (31) zum Einstellen der Abgasrückführmenge die Rückstellkräfte variiert,
- wobei die Rückstellkräfte zumindest teilweise mittels wenigstens eines Federelements erzeugt werden,
**dadurch gekennzeichnet,**
**dass** die Stelleinrichtung (31) zum Einstellen der Abgasrückführmenge eine Federsteifigkeit des Federelements variiert.

2. AGR-Ventil nach Anspruch 1,
**dadurch gekennzeichnet,**
**dass** das Ventilglied (28) als Feder ausgestaltet ist und das die Rückstellkräfte erzeugende Federelement bildet.

3. AGR-Ventil nach Anspruch 1 oder 2,
**dadurch gekennzeichnet,**
**dass** das Ventilglied (28) als Blattfeder ausgestaltet ist und im Innenraum (20) an einem Gehäuse (19) des AGR-Ventils (14) einseitig befestigt ist.

4. Brennkraftmaschine, insbesondere für ein Fahrzeug,
- mit wenigstens einer Abgasrückführleitung (13) zum externen Rückführen von Abgasen von einer Abgasseite der Brennkraftmaschine (1) zu einer Frischluftseite der Brennkraftmaschine (1) und
- mit einem in der Abgasrückführleitung (13) angeordneten Abgasrückführventil (14) nach einem der Ansprüche 1 bis 3.

## Claims

1. An exhaust gas recirculation valve for installation in an exhaust gas recirculation line (13) for the external recirculation of exhaust gases of an internal combustion engine (1), in particular of a motor vehicle, from an exhaust gas side of the internal combustion engine (1) to a fresh air side of the internal combustion engine (1),
- having a valve member (28) both for setting a quantity of the exhaust gas recirculated from the exhaust gas side to the fresh air side and also for blocking a counterflow (30) oriented from the fresh air side to the exhaust gas side,
- wherein the valve member (28) works together with an inlet opening (23), which is situated in an inner chamber (20) of the EGR valve (14) and communicates with an exhaust-side inlet connection (21) of the EGR valve (14),
- wherein the valve member (28) is situated so it is adjustable in relation to the inlet opening (23) and is driven or drivable using restoring forces into a closed position, in which the valve member (28) blocks the inlet opening (23),
- a final control element (31) is provided, which works together with the valve member (28) to set the exhaust gas recirculation quantity,
- wherein the final control element (31) varies the restoring forces to set the exhaust gas recirculation quantity,
- wherein the restoring forces are at least partially generated using at least one spring element,
**characterized in**
**that** the final control element (31) varies a spring rigidity of the spring element to set the exhaust gas recirculation quantity.

2. The EGR valve according to Claim 1,
**characterized in that** the valve member (28) is designed as a spring and forms the spring element generating the restoring forces.

3. The EGR valve according to Claim 1 or 2,
**characterized in that** the valve member (28) is designed as a leaf spring and is fastened to a housing (19) of the EGR valve (14) on one side in the inner chamber (20).

4. An internal combustion engine, in particular for a motor vehicle,
- having at least one exhaust gas recirculation line (13) for the external recirculation of exhaust gases from an exhaust gas side of the internal combustion engine (1) to a fresh air side of the internal combustion engine (1), and
- having a multipurpose valve (14) according to anyone of the claims 1 to 3, and situated in the exhaust gas recirculation line (13).

## Revendications

1. Soupape de recyclage de gaz d'échappement destinée à être montée dans une conduite de recyclage de gaz d'échappement (13) pour le recyclage externe de gaz d'échappement d'un moteur à combustion interne (1), en particulier d'un véhicule automobile, allant d'un côté gaz d'échappement du moteur à combustion interne (1) à un côté air frais du moteur à combustion interne (1),
- comprenant un élément de soupape (28) destiné aussi bien au réglage d'une quantité des gaz d'échappement recyclés du côté gaz d'échappement vers le côté air frais qu'au blocage d'un contrecourant (30) orienté du côté air frais vers le côté gaz d'échappement,
- l'élément de soupape (28) coopérant avec une ouverture d'entrée (23), qui est disposée dans un espace intérieur (20) de la soupape RGE (14) et qui communique avec un branchement d'entrée (21) côté gaz d'échappement de la soupape RGE (régulation des gaz d'échappement) (14),
- l'élément de soupape (28) étant disposé de manière déplaçable par rapport à l'ouverture d'entrée (23) et étant entraîné ou pouvant être entraîné au moyen de forces de rappel dans une position de fermeture, dans laquelle l'élément de soupape (28) bloque l'ouverture d'entrée (23),
- un dispositif de réglage (31) étant prévu, qui coopère avec l'élément de soupape (28) pour le réglage de la quantité de recyclage de gaz d'échappement,
- le dispositif de réglage (31) faisant varier les forces de rappel pour le réglage de la quantité recyclée de gaz d'échappement,
- les forces de rappel étant générées au moins en partie au moyen d'au moins un élément de ressort,
**caractérisée en ce que**
le dispositif de réglage (31) fait varier une rigidité de l'élément de ressort pour le réglage de la quantité recyclée de gaz d'échappement.

2. Soupape RGE selon la revendication 1,
**caractérisée en ce que**
l'élément de soupape (28) est conçu sous forme de ressort et forme l'élément de ressort générant les forces de rappel.

3. Soupape RGE selon la revendication 1 ou 2,
**caractérisée en ce que**
l'élément de soupape (28) est conçu sous forme de ressort à lame et est fixé par un côté dans l'espace intérieur (20) sur un boîtier (19) de la soupape RGE (14).

4. Moteur à combustion interne, en particulier pour un véhicule,
- comprenant au moins une conduite de recyclage de gaz d'échappement (13) pour le recyclage externe de gaz d'échappement d'un côté gaz d'échappement du moteur à combustion interne (1) vers un côté air frais du moteur à combustion interne (1) et
- une soupape de recyclage de gaz d'échappement (14) disposée dans la conduite de recyclage de gaz d'échappement (13) selon l'une quelconque des revendications 1 à 3.
